# EUROPÄISCHE PATENTSCHRIFT

(11) **EP 1 219 104 B1**
(45) Veröffentlichungstag und Bekanntmachung des Hinweises auf die Patenterteilung: **06.12.2006**
(21) Anmeldenummer: 00904788.7
(22) Anmeldetag: 28.02.2000
(51) Int. Cl.: H04M 15/00, H04M 3/51, H04M 3/58

(54) **VERFAHREN, MIT WELCHEM DIE TAXIERUNGSART WÄHREND EINER VERBINDUNG GEÄNDERT WERDEN KANN**
METHOD FOR CHANGING THE CHARGE TYPE DURING AN ESTABLISHED CONNECTION
PROCEDE PERMETTANT DE MODIFIER LE TYPE DE TAXATION PENDANT UNE COMMUNICATION

(30) Priorität: 07.10.1999 EP 99810918
(43) Veröffentlichungstag der Anmeldung: 03.07.2002
(73) Patentinhaber: Swisscom Mobile AG, 3050 Bern (CH)
(72) Erfinder: COSTA, Jean-Paul, CH-1580 Avenches (CH); HEGARTY, John, CH-3007 Bern (CH)
(74) Vertreter: P&TS Patents & Technology Surveys SA
(86) Internationale Anmeldenummer: PCT/CH2000/000111
(87) Internationale Veröffentlichungsnummer: WO 2001/026353

(56) Entgegenhaltungen:
- EP-A- 0 491 497
- EP-A- 0 604 042
- WO-A-97/40634
- WO-A-99/29092
- US-A- 5 602 907
- US-A- 5 822 411
- US-A- 5 937 051

## Beschreibung

### Technisches Gebiet

Die vorliegende Erfindung betrifft ein Verfahren, eine Schnittstelle, sowie einen Datenträger mit einem Programm, das von Datenverarbeitungsmitteln in einem Rechner ausgeführt werden kann, und mit welchen die Taxierungsart während einer telefonischen Verbindung geändert werden kann.

### Stand der Technik

Es sind schon verschiedene Taxierungsarten für verschiedene Arten von Telefonverbindungen bekannt. Die meisten Verbindungen werden mit einem festen Betrag für jedes angefangene Zeitelement dem anrufenden A-Teilnehmer verrechnet, wobei der verrechnete Betrag von unterschiedlichen Faktoren abhängig sein kann. Andere Verbindungen werden teilweise oder ganz dem angerufenen B-Teilnehmer verrechnet; dies ist beispielsweise der Fall mit kommerziellen 0800 Nummern. Manche Netzbetreiber verrechnen Verbindungen auch unabhängig von der Dauer (beispielsweise pauschal) oder bieten Dienstanbietern die Möglichkeit an, einen Teil der Gebühren für ankommende Verbindungen einzukassieren (09xx oder 156-Nummern).

Es wurde ausserdem vorgeschlagen, den verrechneten Betrag von der gewünschten Dienstqualität (QoS, Quality of Service) abhängig zu machen. Dies ist beispielsweise für telefonische Verbindungen über Internet (VoIP, Voice over Internet) oder über ATM (Asynchronous Time Multiplexing) der Fall.

Es ist auch bekannt, dass der Telekommunikationsnetzbetreiber die Taxierungsart während einer Verbindung ändern kann. Dies ist unter anderem der Fall, wenn der verrechnete Betrag von der Verrechnungsperiode abhängig ist und wenn sich die Verbindung über verschiedene Verrechnungsperioden erstreckt. In diesem Fall kann der Netzbetreiber den Tarif pro Zeitelement auch während der Verbindung anpassen.

US-A-5,822,411 beschreibt ein System in welchem ein Teilnehmer die Taxierungsart während einer Verbindung ändern kann, indem er eine entsprechende Instruktion an den lokalen Switch sendet. In den meisten Netzen werden viele Taxierungsmerkmale nicht vom Switch bestimmt, sondern von einem übergeordneten Server. Diese Lösung erlaubt daher nur eingeschränkte Möglichkeiten, um die Taxierungsart zu ändern.

US-A-5,602,907 beschreibt ein ähnliches Verfahren, in welchem die Taxierungsart von beiden Teilnehmern während einer Verbindung geändert wird. Auch hier werden nur die lokalen Switches gesteuert.

EP-A-0 491 497 beschreibt ein ähnliches Verfahren, das insbesondere für ein ISDN-Netz geeignet ist.

WO-A1-99/29092 beschreibt eine CTI-Schnittstelle (Computer Tetephony Interface), mit welcher ein Rechner mit einem Switch verbunden werden kann. Die CTI-Schnittstelle erlaubt es aber nicht, Instruktionen direkt an einen übergeordneten SCP-Server zu senden. Das System wird nicht zur Änderung der Taxierungsart während einer Verbindung eingesetzt.

### Darstellung der Erfindung

Ein Ziel der Erfindung ist es, Teilnehmern an telephonischen Verbindungen die Möglichkeit anzubieten, während des Telefongespräches die Taxierungsart zu ändern.

Ein anderes Ziel ist es, eine Taxierungsänderung mit oder ohne Weiterleitung des Anrufs zu einem anderen B-Teilnehmer zu ermöglichen.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele bei einem Verfahren entsprechend dem Oberbegriff des Anspruchs 1 dadurch erreicht, dass der benannte Agent die Taxierungsart ändert, indem er eine entsprechende Instruktion über eine CTI-Schnittstelle an den benannten Server SCP sendet.

So kann zum Beispiel der Anruf eines A-Teilnehmers, der über eine Gratis-Auskunfts-Nummer (0800) angerufen hat, mit einer entsprechenden Tarifänderung an einen spezialisierten Support (der normalerweise über eine kostenpflichtige 0900-Nummer erreicht wird) weitergeleitet werden.

Gesprächspartner, die eine bessere Dienstqualität wünschen, ohne die Verbindung zu unterbrechen (beispielsweise um Bilder zu übertragen), können mit dem erfindungsgemässen Verfahren vom übergeordneten Server diese verbesserte Dienstqualität und den entsprechenden Tarif verlangen.

Der anrufende A-Teilnehmer wird vorzugsweise mittels Ansagetext über die bevorstehende Änderung informiert, es steht ihm also frei das Angebot anzunehmen oder das Telefongespräch abzubrechen.

### Kurze Beschreibung der Figuren

Im Folgenden werden anhand der beigefügten Zeichnung bevorzugte Ausführungsbeispiele der Erfindung näher beschrieben. Es zeigen:
Die Fig. 1 ein schematisches Diagramm eines Systems, in welchem ein Anruf weitergeleitet wird während gleichzeitig die Taxierungsart geändert wird.
Die Fig. 2 ein schematisches Diagramm eines Systems mit einer netzbasierenden Anrufzentrale, in welchem ein Anruf weitergeleitet wird, während gleichzeitig die Taxierungsart geändert wird.
Die Fig. 3 ein schematisches Diagramm eines Systems, in welchem ein Agent Anrufe weiterleiten und die Taxierungsart mit seinem telefonischen Endgerät über einen Rechner ändern kann.
Die Fig. 4 ein schematisches Diagramm eines Systems, in welchem ein Agent Anrufe weiterleiten und die Taxierungsart mit seinem Rechner über ein telefonisches Endgerät ändern kann.
Die Fig. 5 ein schematisches Diagramm eines Systems, in welchem ein Agent Anrufe weiterleiten und die Taxierungsart mit seinem Rechner ändern kann.
Die Fig. 6 ein schematisches Diagramm eines Systems, in welchem ein Agent Anrufe weiterleiten und die Taxierungsart mit seinem telefonischen Endgerät (beispielsweise mittels DTMF oder Sprachbefehlen) ändern kann.

### Wege zur Ausführung der Erfindung

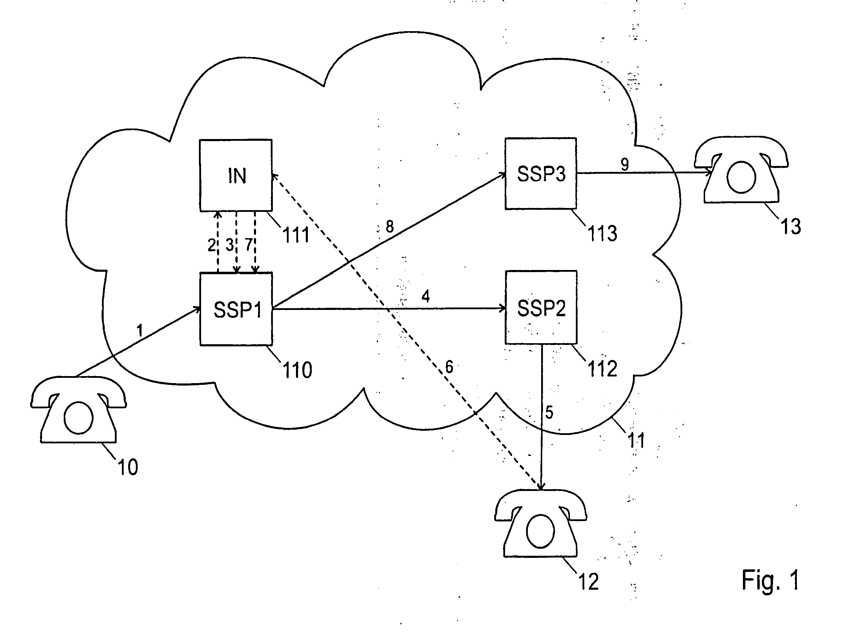

Die Figur 1 illustriert die Abläufe in einem System gemäss einer Ausführungsvariante der Erfindung. In diesem Beispiel umfasst das System ein Telekommunikationsnetz 11, beispielsweise ein öffentliches geschaltetes Telefonnetz, ein Mobilfunknetz oder ein ISDN-Netz (Integrated Services Digital Network), mit welchem eine Vielzahl von Endgeräten 10, 12, 13 (beispielsweise Telefonendgeräte, Faxgeräte, Modems, usw.) verbunden sind. Mindestens gewisse Endgeräte können auch über eine private oder netzbasierende Anrufzentrale (PBX, Private Branch Exchange) mit dem Telekommunikationsnetz verbunden sein.

Das Telekommunikationsnetz 11 ist ein intelligentes Netz (IN) und umfasst somit eine übergeordnete Intelligenz 111, beispielsweise einen SCP (Signal Control Point). Der SCP umfasst eine Datenbank, die angibt, wie ankommende Verbindungen weitergeleitet werden sollen. Eine Vielzahl von digitalen Vermittlungsstellen 110, 112, 113 (Switches), beispielsweise SSP (Signal Switching Points), vermitteln die Verbindungen auf Basis der Angaben im SCP. Zu diesem Zweck sendet jede Vermittlungsstelle, die eine Verbindung empfangen hat, welche eine intelligente Behandlung verlangt, eine Abfrage über ein Signalisierungsprotokoll (beispielsweise SS7 oder TCP-IP) an den SCP 111. Der SCP interpretiert die Abfrage anhand seiner Datenbank und der vom SSP angegebenen Kriterien, um zu bestimmen, wie die Verbindung vermittelt werden muss, und sendet eine entsprechende Antwort an den SSP.

Im dargestellten Beispiel wird das Endgerät 10 von einem anrufenden A-Teilnehmer (beispielsweise einem Kunden einer bestimmten Firma) verwendet, während die Endgeräte 12 und 13 von Agenten (beispielsweise beim Support der Firma) betrieben werden. Für andere Anwendungen sind die Abläufe gleich, aber vielleicht ohne neue Zielnummer (der Anrufer ist weiterhin mit dem gleichen Agenten verbunden).

Der Anrufer wählt die gewünschte Nummer, in diesem Beispiel die Gratis-0800-Nummer einer Anrufzentrale, mit welcher mehrere Agenten verbunden sind, beispielsweise bei der kostenpflichtigen Help Desk in einer Firma (Pfeil 1). Der SSP1 erkennt die gewählte Nummer als Mehrwertdienstnummer und fragt die übergeordnete Intelligenz 111 (z.B. einen alleinstehenden SCP oder einen SCP der von einer Anrufzentrale gesteuert wird), was mit dieser Nummer getan werden muss (Pfeil 2). Die Intelligenz 111 sucht in der Datenbank und gibt dem SSP1 die Zielnummer und die Taxierungsart für diese Nummer bekannt (Pfeil 3). In diesem Beispiel wird die gesamte Verbindungsgebühr dem angerufenen Agenten 12 verrechnet.

Sobald der SSP1 110 die Antwort vom SCP 111 erhalten hat, baut er in diesem Beispiel eine Verbindung über den Nutzkanal (Sprachkanal) mit dem SSP2 112 (Pfeil 4) auf, welcher den Anrufer 1 mit dem Agenten 12 verbindet (Pfeil 5). Das Gespräch zwischen dem Anrufer 1 und dem Agenten 12 findet statt.

Nach einiger Zeit merkt der Agent 12 dass der Tarif und eventuell das Ziel geändert werden müssen, vielleicht weil die Frage des Kunden 1 nur vom kostspieligem Support beantwortet werden kann und nicht mehr als gratis Dienstleistung. Erfindungsgemäss ändert der Agent 12 die Taxierungsart und das Verbindungsziel, indem er eine entsprechende Instruktion direkt an die Intelligenz 111 sendet (Pfeil 6). Wir werden später erklären, wie diese Instruktion vorbereitet und übertragen werden kann.

Die Intelligenz 111 empfängt die Instruktion des Agenten 12, prüft eventuell seine Kohärenz, und gibt dem SSP1 110 das neue Ziel und den neuen Tarif über das Signalisierungssystem bekannt (Pfeil 7). Kann das Ziel nicht bestimmt werden (beispielsweise weil kein Agent verfügbar ist) wird der Anruf in eine Warteschlange gestellt, wobei eine gesprochene Meldung vorbereitet und an den Anrufer 10 gesendet werden kann.

Sobald der SSP1 110 diesen Befehl vom SCP 111 erhalten hat, werden die Verbindungen 4 und 5 zwischen SSP1, SSP2 und dem Agenten 12 abgebrochen und eine neue Verbindung 8 zwischen SSP1 und dem anderen SSP3 113 wird aufgebaut. Der SSP3 verbindet dann den Anrufer 1 mit dem neuen Agenten 13, wobei eine neue Taxierungsart verwendet wird, indem beispielsweise die gesamte Verbindung dem Anrufenden belastet wird, eventuell noch mit einem zusätzlichen Honorar zu Gunsten des angerufenen Agenten 13.

Bevor die Verbindung mit dem neuen Agenten 13 hergestellt wird, wird vorzugsweise der Anrufer mit einem von einem Sprachgenerator im SSP1 oder beim Agenten 12 vorbereiteten Ansagetext über die bevorstehende Änderung informiert. Somit hat er die Möglichkeit, die neue Verbindung anzunehmen oder das Telefongespräch abzubrechen. In einer Variante wird er vom menschlichen Agenten 12 informiert, bevor die Verbindung abgebrochen wird. In einer anderen Variante wird er über eine Meldung durch einen Signalisierungskanal informiert (beispielsweise mit einer Anzeige auf dem Endgerät).

Der Agent 12 kann beispielsweise folgende neue Tarifstruktur verlangen:
■ Eine für den anrufenden A-Teilnehmer Gratis-Verbindung (0800-Nummer; Kosten werden vom angerufenen Agenten getragen).
■ Verschiedene fixe Beträge pro Zeitelement.
■ Verschiedene fixe Beträge pro Zeitelement, wobei dem Agenten ein Teil des Betrags zusteht (09xx Nummer).
■ Zusätzliche einmalige Belastung eines fixen Betrags, z.B. beim Verkauf einer Ware oder einer Dienstleistung.
■ Anrechnung eines fixen Betrags auf der Telefonrechnung zu Gunsten des Anrufers (z. B. Gutschrift).

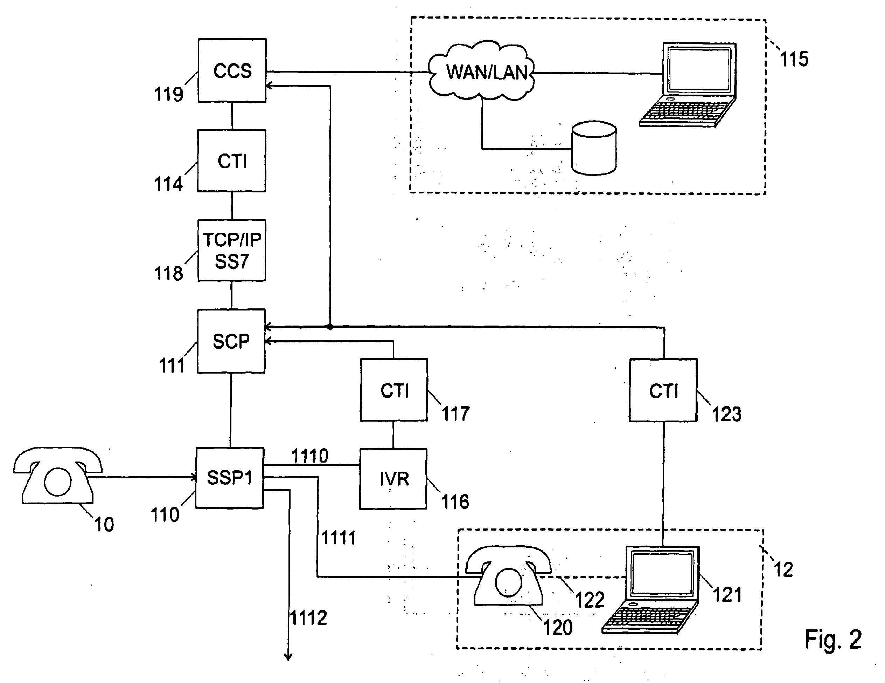

Die Figur 2 zeigt ein Beispiel eines Systems mit einer Vermittlungsstelle (Switch) SSP1 110 und einer übergeordneten Intelligenz 111, die in diesem Beispiel einen SCP 111 und einen netzbasierenden Anrufzentralserver (CCS, Call Center Server) 119 umfassen. Der Anrufzentralserver führt einen sogenannten Service Script aus, um Verbindungen und registrierte Agenten zu behandeln und um zu definieren, wie ankommende Anrufe behandelt werden sollen. Der Script kann Instruktionen enthalten, die die Vermittlung eines ankommenden Anrufs mit einer bestimmten Zieladresse bewirken, oder die ein interaktives Sprachsystem (IVR) 116 veranlassen, eine bestimmte Sprachmeldung zu erzeugen. Unter anderem verwaltet die Anrufzentrale die Verbindung der ankommenden Anrufe mit den registrierten Agenten.

Die Anrufzentrale 119 prüft unter anderem, welche Agenten zu jeder Zeit verfügbar sind und vermittelt die ankommenden Anrufe mit frei verfügbaren Agenten gemäss vordefinierten Kriterien. Die Anrufzentrale wird vorzugsweise mit herkömmlichen Geräten erstellt, die auch für private Anrufzentralen verwendet werden können.

Die Anrufzentrale wird über eine CTI-Schnittstelle (Computer Telephon Interface) 114 mit dem SCP 111 verbunden, wobei ein Protokoll-Konverter 118 vorgesehen werden kann (beispielsweise wenn die CTI-Schnittstelle 114 das TCP-IP Protokoll oder eine X.500 Schnittstelle verwendet, während der SCP nur SS7 versteht). Auf diese Weise kann die Anrufzentrale 119 Instruktionen an den SCP senden.

Der Fachmann wird verstehen, dass je nach Ausführungsvariante gewisse Funktionen der Anrufzentrale 119 auch im SCP vorgesehen werden können, und dass es sogar möglich wäre, dass alle Funktionen der Komponenten 111, 114, 118 und 119 von einem einzigen Server zur Verfügung gestellt werden. Diese Variante hätte sogar den Vorteil, dass die Anrufzentrale alle Funktionen eines SCP ansteuern könnte, und nicht nur Funktionen, die mit externen Instruktionen gesteuert werden können. Der Nachteil ist allerdings, dass diese.integrierte Lösung kaum mit standardisierten Komponenten verwirklicht werden kann.

Der Anrufzentralserver 119 wird vorzugsweise mit einem Backoffice-Werkzeug 115 verbunden, welches beispielsweise mehrere Server und Datenbanken umfasst die über ein LAN (Local Area Network) oder WAN (Wide Area Network) verbunden sind und beispielsweise die Verrechnung der Verbindungen und Dienstleistungen, die Herstellung von Statistiken, die Anzeige des aktuellen Status des Servers 119 usw. erlauben. Die Server im Backoffice werden vom Betreiber der Anrufzentrale 119 verwaltet (beispielsweise vom Betreiber des Telefonnetzes 11). Das Backoffice-System baut vorzugsweise eine WEB-Seite auf, auf welcher statistische Daten für den registrierten Benutzer der Zentrale 119 dargestellt werden. Registrierte Agenten können beispielsweise mit einem herkömmlichen Browser über Internet auf diese Informationen zugreifen.

Die Vermittlungsstelle 110 kann den anrufenden Agenten 10 mit verschiedenen Ausgangslinien 1110, 1111, 1112, usw. verbinden, wobei die vermittelte Linie vom SCP 111 bestimmt wird. Im dargestellten Beispiel ist die Linie 1110 mit einem interaktiven Sprachsystem 116 (IVR, Interactive Voice Response) verbunden, welches über eine CTI-Schnittstelle 117 Instruktionen an die Intelligenz 111 senden kann. Das interaktive Sprachsystem 116 kann beispielsweise Sprachmeldungen generieren, Sprache erkennen, usw.

Die Linie 1111 ist mit dem Agenten 12 verbunden, eventuell über eine weitere Vermittlungsstelle 112, wie schon erläutert. Die dritte Linie 1112 ist in diesem Beispiel mit einer externen Vorrichtung verbunden, beispielsweise mit einem anderen externen Agenten.

Der Agent 12 verfügt in diesem Beispiel über ein Telefonendgerät 120 und über einen Rechner 121, die vorzugsweise über eine CTI-Schnittstelle 122 verbunden sind. Der Agent 12 ist über einen geeigneten Kanal (beispielsweise einer anderen CTI-Schnittstelle 123) mit der Intelligenz 111/119 verbunden, vorzugsweise mit dem Anrufzentralserver 119 oder als Variante direkt mit dem SCP 111 und kann somit diese Intelligenz ansteuern, um der Anrufzentrale mitzuteilen, dass er Anrufe entgegennehmen kann, um telefonische Konferenzen aufzubauen, um die Taxierungsart zu ändern, um das Ziel der Verbindung (B-Nummer) zu ändern, usw. Als Variante kann der Agent 12 die Intelligenz auch indirekt über die Linie 1111 und die Vermittlungsstelle 110 ansteuern.

Die verschiedenen CTI-Schnittstellen 114, 117, 123 können verschiedenen bekannten Spezifikationen entsprechen, unter anderem:
■ TAPI (Telephony Application Programming Interface) von Microsoft (Warenzeichen), beispielsweise TAP12.1 oder TAP13.0.
■ TSAPI (Telephony Service Application Programming Interface) von Microsoft (Warenzeichen) von Novell (Warenzeichen) oder Callpath von IBM (Warenzeichen).
■ CSTA (Computer Supported Telecommunications Appl ications).
■ JTAPI (JAVA TAPI) von SUN (Warenzeichen).
■ usw.

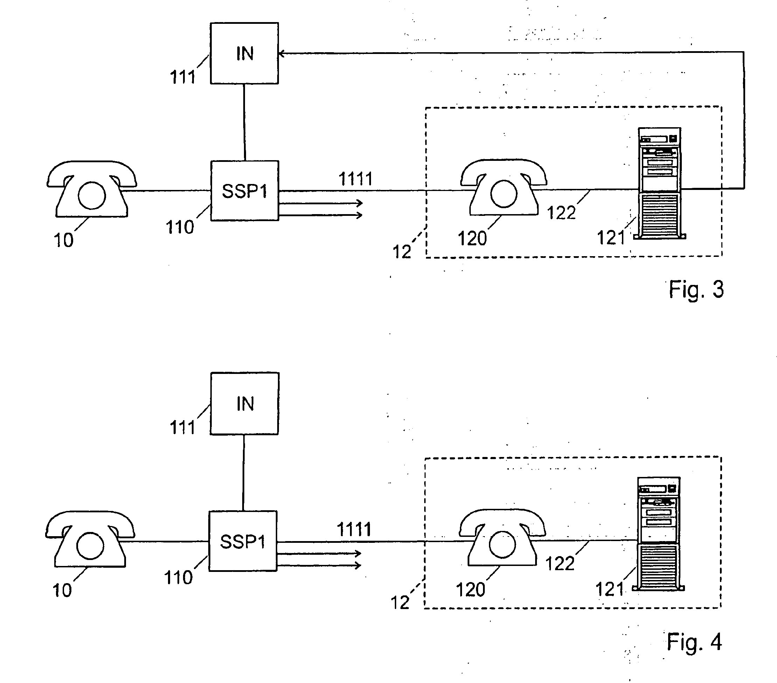

Die Figur 3 zeigt schematisch ein System mit einer Vermittlungsstelle 110, einer übergeordneten Intelligenz 111 und einem Agenten 12 mit einem Telefonendgerät 120 und einem Rechner 121, die miteinander über eine CTI-Schnittstelle 122 verbunden sind. Der Rechner 121 ist mit der Intelligenz (beispielsweise mit dem Anrufzentralserver 119 und/oder mit dem SCP 111) verbunden (beispielsweise über eine zusätzliche telefonische Linie oder über Internet). In diesem Beispiel kann der Agent 12 eine Taxierungsänderungs- und Weiterleitungs-Instruktion vorbereiten, indem er vordefinierte Tasten auf seinem telefonischen Endgerät eintippt. Der Rechner 121 empfängt die erzeugten DTMF-Töne (Dual Tone Muti Frequency) und konvertiert sie in geeignete Instruktionen für die Intelligenz 111/119, die beispielsweise mit einem Modem gesendet werden. Als Variante werden die Instruktionen mit einer geeigneten Software im Rechner 121 vorbereitet und an die Intelligenz gesendet.

Die Figur 4 zeigt schematisch ein System, in welchem der Rechner 121 nicht direkt mit der Intelligenz 111/119 verbunden ist. In diesem Fall können die mit dem Telefonendgerät 120 oder mit dem Rechner 121 erfassten Instruktionen über die Telefonlinie 1111 und die Vermittlungsstelle 110 an den SCP 111 übertragen werden. Diese Übertragung kann beispielsweise über den Signalisierungskanal erfolgen oder über eine neue Verbindung, welche hergestellt wird nachdem die bestehende Verbindung geparkt wurde.

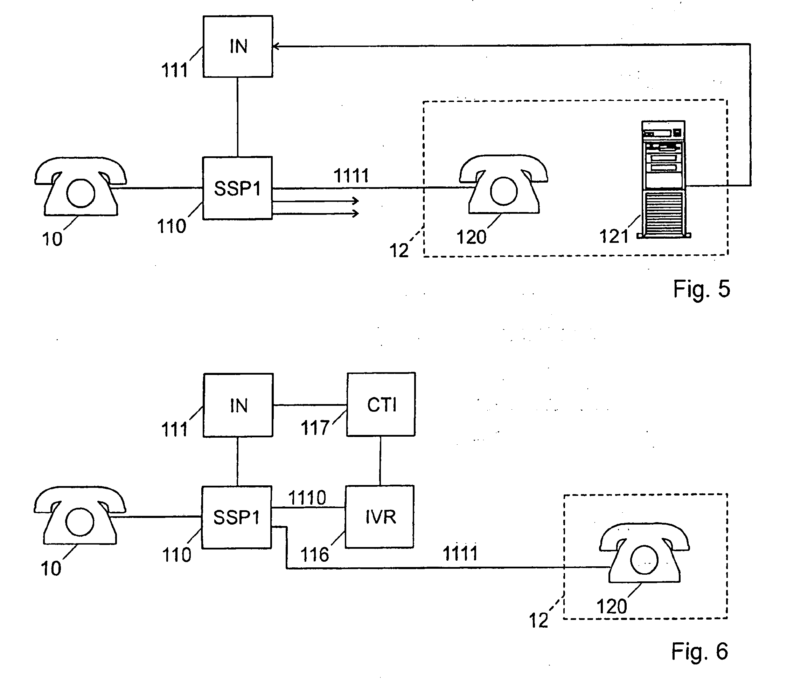

Die Figur 5 zeigt schematisch ein System, in welchem der Rechner 121 und das Telefongerät 120 nicht miteinander verbunden sind. Der Rechner 121 wird wie in der mit der Figur 3 dargestellten Variante mit der Intelligenz 111/119 verbunden (beispielsweise über Internet oder über eine zusätzliche Telefonlinie). Der Agent 12 kann Instruktionen zur Taxierungsartänderung mit einem speziellen Programm im Rechner 121 vorbereiten und über diese direkte Verbindung an die Intelligenz 111/119 übertragen.

Die Figur 6 zeigt schematisch ein System, in welchem der Agent 12 nur über ein Telefonendgerät 120 verfügt, das nicht direkt mit der Intelligenz 111/119 verbunden ist. Die Vermittlungsstelle 110 verfügt über ein interaktives Sprachsystem 116 oder ist mit einem solchen Generator verbunden.

In diesem Fall kann der Agent 12 Instruktionen an die Intelligenz vorbereiten, indem er zuerst mit geeigneten bekannten DTMF-Befehlen die Verbindung mit dem Anrufer 1 parkt und über die Vermittlungsstelle 110 eine neue Verbindung mit dem-Sprachsystem 116 aufbaut. Durch geeignete Sprachbefehle kann dann der Agent 12 das interaktive Sprachsystem 116 veranlassen, eine Instruktion zur Taxierungsartänderung vorzubereiten und über die CTI-Schnittstelle 117 und eine geeignete Linie an die Intelligenz zu senden.

Bei vielen intelligenten Netzen ist es nicht möglich, einen Anruf nach der Herstellung der Verbindung an eine andere Extension zu transferieren. Diese Funktion wird von den bekannten SCP nur selten angeboten. Wenn ein Agent das Ziel der Verbindung ändern will, muss dieses Hindernis überwunden werden. Erfindungsgemäss wird dies mit einem sogenannten Follow-up Anruf gelöst. Zu diesem Zweck sendet die CTI-Schnittstelle 114 eine sogenannte "monitoring on disconnect"-Instruktion an den SCP 111, welcher diese Instruktion an die Vermittlungsstelle 110 weiterleitet. Die Vermittlungsstelle 110 reagiert, indem die Verbindung mit dem A-Teilnehmer 10 nach dem Unterbrechen der Verbindung parkiert wird, statt die Linie einfach freizuschalten. Die Vermittlungsstelle sendet dann eine Abfrage an den SCP 111, um zu prüfen, ob eine weitere Verbindung (ein "Follow-up Anruf") hergestellt werden kann. Der Anrufer 10 merkt nicht, dass eine andere Verbindung hergestellt wurde. Wenn die Vermittlungsstelle 110 und die CTI-Schnittstelle 114 weiterhin die gleiche Verbindungsidentifizierung (Call_ID) verwenden, merkt der SCP 111 auch nicht, dass eine andere Verbindung hergestellt wurde. Mit diesem Mechanismus kann die CTI-Schnittstelle 114 jeden Anruf an eine andere Extension transferieren.

Das erfindungsgemässe Verfahren kann beispielsweise von einer Supportabteilung angewendet werden. Ein Anrufer ruft über eine Gratisnummer an. Wenn zum Beispiel für das Gerät keine Garantie mehr besteht, wird der Supporttarif (X Fr./min) eingeschaltet.

Ein zweites Beispiel der Anwendung betrifft den Verkauf von verschiedenen Waren oder Dienstleistungen. Eine typische Anwendung wäre eine Dienstnummer, die Auskunft über Kinoprogramme gibt und anschliessend Billets verkaufen kann. Der Anrufer ruft über eine kostenpftichtige 0900-Nummer an und lässt sich über das Kinoprogramm beraten. Anschliessend kauft er Eintrittskarten für das Kino. Durch das erfindungsgemässe Verfahren werden die Eintrittskarten direkt auf der Telefonrechnung belastet (fixer Betrag).

Durch die Möglichkeit, den SCP 111 direkt über eine CD-Schnittstelle 114 mit einem Anrufzentralserver 119 im Netz so zu steuern, dass nicht nur die Taxierungsart, sondern wenn gewünscht auch das Ziel der Verbindung (B-Adresse) geändert werden kann, eröffnen sich für den Fachmann andere leicht ausdenkbare Einsatzmöglichkeiten.

Der Fachmann wird ausserdem verstehen, dass das erfindungsgemässe Verfahren sowohl für interne private Anrufzentralen (beispielsweise mit einer privaten Vermittlungsstelle PBX) als auch für netzbasierende Anrufzentralen verwendet werden kann.

Ausser das beschriebene Verfahren betrifft die vorliegende Erfindung auch eine CTI-Schnittstelle 114, die mit Hardware- und/oder Software Komponenten hergestellt werden kann, sowie einen Datenträger mit einem Programm, das vom Rechner 120 beim Agenten 12 durchgeführt werden kann, um den Anrufzentralserver 119 anzusteuern.

## Patentansprüche

1. Verfahren, mit welchem die Taxierungsart während einer telefonischen Verbindung zwischen einem Anrufer (10) und einem Agenten (12) geändert werden kann, wobei die Verbindung durch mindestens einen Switch SSP (110) in einem intelligenten Telekommunikationsnetz (11) geleitet wird, wobei der benannte Switch SSP (110) von einem übergeordneten Server SCP (111) kontrolliert wird,
**dadurch gekennzeichnet, dass** der benannte Agent (12) die Taxierungsart ändert, indem er eine entsprechende Instruktion über eine CTI-Schnittstelle (114, 117, 122, 123) an den benannten Server SCP (111) sendet.

2. Verfahren gemäss dem vorhergehenden Anspruch, in welchem die benannte Instruktion über eine zweite telefonische Linie gesendet wird.

3. Verfahren gemäss dem Anspruch 1, in welchem die benannte Instruktion mit einem Rechner (121) vorbereitet wird.

4. Verfahren gemäss dem vorhergehenden Anspruch, in welchem der benannte Rechner (121) direkt mit dem Telefonendgerät (120) des benannten Agenten über die benannte CTI-Schnittstelle (123) verbunden ist.

5. Verfahren gemäss dem Anspruch 3, in welchem die benannte Instruktion über das Internet gesendet wird.

6. Verfahren gemäss dem Anspruch 1, in welchem die benannte Instruktion über mit Telefontasten eingegebene DTMF-Codes eingegeben wird.

7. Verfahren gemäss dem Anspruch 1, in welchem die benannte Instruktion als Sprachbefehl eingegeben wird.

8. Verfahren gemäss einem der Ansprüche 6 oder 7, in welchem die benannte Verbindung zwischen dem benannten Anrufer (10) und dem benannten Agenten (12) geparkt wird, in welchem eine neue Verbindung zwischen dem benannten Agenten (12) und einem Sprachsystem (116) beim benannten übergeordneten Server SCP (111) hergestellt wird, und in welchem die benannte Instruktion über die benannte neue Verbindung übertragen wird.

9. Verfahren gemäss einem der vorhergehenden Ansprüche, in welchem die benannte neue Taxierungsart einen neuen Verbindungspreis pro Zeitelement definiert.

10. Verfahren gemäss einem der vorhergehenden Ansprüche, in welchem die benannte neue Taxierungsart die Verrechnung eines fixen Betrags auf der Telefonrechnung des Anrufers (10) ermöglicht.

11. Verfahren gemäss einem der vorhergehenden Ansprüche, in welchem der benannte Agent (12) eine Instruktion zum Aufbau einer Verbindung zwischen dem benannten Anrufer (10) und einem anderen Agenten (13) an den benannten Server sendet.

12. Verfahren gemäss einem der vorhergehenden Ansprüche, in welchem der benannte Agent (12) den benannten Server SCP (111) über eine Anrufzentrale (119) ansteuert.

13. Verfahren gemäss dem vorhergehenden Anspruch, in welchem der benannte Agent (12) den benannten Server SCP (111) über eine netzbasierende Anrufzentrale (119) ansteuert.

14. Verfahren gemäss dem vorhergehenden Anspruch, in welchem die benannte netzbasierende Anrufzentrale (119) über die benannte CTI-Schnittstelle (114) mit dem benannten Server SCP (111) verbunden ist.

15. Verfahren gemäss dem vorhergehenden Anspruch, **dadurch gekennzeichnet, dass** in einem Protokoll-Konverter (118) das Protokoll zwischen der CTI-Schnittstelle und dem benannten Server SCP (111) konvertiert wird.

16. Verfahren gemäss Anspruch 14 oder 15, in welchem die benannte Verbindung durch die benannte CTI-Schnittstelle (114) unterbrochen wird, in welchem die benannte CTI-Schnittstelle (114) einen Follow-up Anruf vom benannten Server SCP (110) verlangt, und in welchen eine neue Verbindung mit einer neuen Taxierungsart und mit der selben Verbindungsidentifizierung hergestellt wird.

17. CTI-Schnittstelle (114), **dadurch gekennzeichnet, dass** sie einer Schnittstelle für eine netzbasierende Anrufzentrale (119) umfasst, aus welcher Instruktionen aus einer netzbasierten Anrufzentrale entgegengenommen werden können, und eine TCP/IP-Schnittstelle, mit welcher ein SCP (111) angesteuert werden kann.

18. CTI-Schnittstelle gemäss dem vorhergehenden Anspruch, **dadurch gekennzeichnet, dass** sie ausserdem einen Protokoll-Konverter (118) umfasst, welcher das TCP-IP Protokoll in ein vom SCP (111) verständliches Protokoll (SS7, X.500) konvertiert.

19. Datenträger, in welchem ein Softwareprogramm gespeichert ist, das von Datenverarbeitungsmitteln in einem Rechner (121) ausgeführt werden kann um, ein Verfahren gemäss einem der Ansprüche 1 bis 16 durchzuführen oder um eine CTI-Schnittstelle (114) gemäss einem der Ansprüche 17 oder 18 anzusteuern.

## Claims

1. Method for changing the charge type during a telephone connection between a caller (10) and an agent (12), where the connection is directed through at least one SSP switch (110) in an intelligent telecommunication network (11), where said SSP switch (110) is controlled by a super-ordinate SCP server (111),
**characterized in that** said agent (12) changes the charge type by sending a corresponding instruction over a CTI interface (114, 117, 122, 123) to said SCP server (111).

2. Method according to the preceding claim, wherein said instruction is sent over a second telephone line.

3. Method according to claim 1, wherein said instruction is prepared with a computer (121).

4. Method according to the preceding claim, wherein said computer (121) is directly connected with the telephone sending device (120) of said agent over said CTI interface (123).

5. Method according to claim 3, wherein said instruction is sent over the Internet.

6. Method according to claim 1, wherein said instruction is inputted over DTMF codes entered with telephone keys.

7. Method according to claim 1, wherein said instruction is entered as voice command.

8. Method according to one of the claims 6 or 7, wherein said connection between said caller (10) and said agent (12) is parked, wherein a new connection between said agent (12) and a voice system (116) at said super-ordinate SCP server (111) is established and wherein said instruction is transmitted over said new connection.

9. Method according to one of the preceding claims, wherein said new charge type defines a new connection price per time element.

10. Method according to one of the preceding claims, wherein said new charge type allows a fixed amount to be billed on the telephone bill of the caller (10).

11. Method according to one of the preceding claims, wherein said agent (12) sends to said server an instruction for establishing a connection between said caller (10) and another agent (13).

12. Method according to one of the preceding claims, wherein said agent (12) controls said SCP server (111) over a call exchange (119).

13. Method according to the preceding claim, wherein said agent (12) controls said SCP server (111) over a network-based call exchange (119).

14. Method according to the preceding claim, wherein said network-based call exchange (119) is connected with said SCP server (111) over said CTI interface (114).

15. Method according to the preceding claim, **characterized in that** the protocol between the CTI interface and said SCP server (111) is converted in a protocol converter (118).

16. Method according to claim 14 or 15, wherein said connection through said CTI interface (114) is interrupted, wherein said CTI interface (114) requests a follow-up call from said SCP server (110) and wherein a new connection is established with a new charge type and with the same connection identification.

17. CTI interface (114), **characterized in that** is has an interface for a network-based call exchange (119) from which instructions from a network-based call exchange can be received, and a TCP/IP interface with which an SCP (111) can be controlled.

18. CTI interface according to the preceding claim, **characterized in that** it further has a protocol converter (118) that converts the TCP-IP protocol into a protocol (SS7, X.500) understood by the SCP (111).

19. Data carrier in which a software program is stored that is capable of being executed by data processing means in a computer (121) to execute a method according to one of the claims 1 to 16 or for controlling a CTI interface (114) according to one of the claims 17 or 18.

## Revendications

1. Méthode pour changer le mode de facturation pendant une connexion téléphonique entre un appelant (10) et un agent (12), la connexion étant acheminée par au moins un commutateur SSP (110) dans un réseau de télécommunication intelligent (11), ledit commutateur SSP (110) étant contrôlé par un serveur SCP central (111),
**caractérisé en ce que** ledit agent (12) change le mode de facturation en envoyant une instruction correspondante par une interface CTI (114, 117, 122, 123) audit serveur SCP (111).

2. Méthode selon la revendication précédente, dans laquelle instruction est envoyée via une deuxième ligne téléphonique.

3. Méthode selon la revendication précédente, dans laquelle ladite instruction est préparée avec un ordinateur (121).

4. Méthode selon la revendication précédente, dans laquelle ledit ordinateur (121) est directement connecté à l'appareil de téléphone émetteur (120) dudit agent sur ladite interface CTI (123).

5. Méthode selon la revendication 3, dans laquelle ladite instruction est envoyée par Internet.

6. Méthode selon la revendication 1, dans laquelle ladite instruction est introduite par des codes DTMF composés avec les touches du téléphone.

7. Méthode selon la revendication1, dans laquelle ladite instruction est entrée comme commande vocale.

8. Méthode selon l'une des revendications 6 ou 7, dans laquelle ladite connexion entre ledit appelant (10) et ledit agent (12) est parquée, où une nouvelle connexion est établie entre ledit agent (12) et un système vocal (116) au niveau du serveur central SCP (111), et où ladite instruction est transmise par la nouvelle connexion.

9. Méthode selon l'une des revendications précédentes, dans laquelle ledit nouveau mode de facturation définit un nouveau prix de connexion par unité de temps.

10. Méthode selon l'une des revendications précédentes, dans laquelle ledit nouveau mode de facturation permet de facturer un montant fixe sur la facture de téléphone de l'appelant (10).

11. Méthode selon l'une des revendications précédentes, dans laquelle ledit agent (12) envoie audit serveur une instruction pour établir une connexion entre ledit appelant (10) et un autre agent (13).

12. Méthode selon l'une des revendications précédentes, dans laquelle ledit agent (12) contrôle ledit serveur SCP (111) via un central d'appel (119).

13. Méthode selon la revendication précédente, dans laquelle ledit agent (12) contrôle ledit serveur SCP (111) via un central d'appel basé sur un réseau (119).

14. Méthode selon la revendication précédente, ledit central d'appel basé sur un réseau (119).étant connecté audit serveur SCP (111) par ladite interface CTI (114).

15. Méthode selon la revendication précédente, **caractérisée en ce que** le protocole entre l'interface CTI et ledit serveur SCP (111) est converti dans un convertisseur de protocole (118).

16. Méthode selon la revendication 14 ou 15, dans laquelle ladite connexion par ladite interface CTI interface (114) est interrompue, où ladite interface CTI (114) demande un appel de follow-up depuis ledit serveur SCP (110), et où une nouvelle connexion est établie avec un nouveau mode de facturation et avec la même identification de connexion.

17. Interface CTI (114), **caractérisée en ce qu'**elle comprend une interface pour un central d'appel basé sur un réseau (119) depuis lequel des instructions depuis un central d'appel basé sur un réseau peuvent être reçus, et une interface TCP/IP avec laquelle un SCP (111) peut être contrôlé.

18. Interface CTI selon la revendication précédente, **caractérisée en ce qu'**elle a de plus un convertisseur de protocole (118) qui convertit le protocole TCP-IP dans un protocole (SS7, X.500) compris par le SCP (111).

19. Support de données dans lequel est sauvegardé un programme logiciel qui peut être exécuté par des moyens de traitement de données dans un ordinateur (121) afin d'exécuter une méthode selon l'une des revendication 1 à 16 ou pour contrôler une interface CTI (114) selon l'une des revendications 17 ou 18.
